# EUROPÄISCHE PATENTSCHRIFT

(11) **EP 2 798 132 B1**
(45) Veröffentlichungstag und Bekanntmachung des Hinweises auf die Patenterteilung: **08.03.2017**
(21) Anmeldenummer: 12809698.9
(22) Anmeldetag: 13.12.2012
(51) Int. Cl.: B60J 7/08, E04F 10/06

(54) **BEDACHUNG MIT SPANNELEMENT**
ROOFING WITH CLAMPING ELEMENT
COUVERTURE COMPRENANT UN ÉLÉMENT DE TENSION

(30) Priorität: 29.12.2011 DE 102011122502
(43) Veröffentlichungstag der Anmeldung: 05.11.2014
(73) Patentinhaber: Wronka, Marc, 40822 Mettmann (DE); Kochenrath, Peter, 42853 Remscheid (DE)
(72) Erfinder: KOCHENRATH, Peter, 42853 Remscheid (DE); WRONKA, Rainer, 40822 Mettmann (DE)
(74) Vertreter: Grundmann, Dirk
(86) Internationale Anmeldenummer: PCT/EP2012/075372
(87) Internationale Veröffentlichungsnummer: WO 2013/098084

(56) Entgegenhaltungen:
- EP-A1- 0 577 892
- DE-U- 1 879 230

## Beschreibung

Die Erfindung betrifft eine Bedachung zur Verwendung als Sonnen- und Regenschutz, umfassend ein stoffartiges Bedachungselement und eine Befestigungsvorrichtung, wobei das Bedachungselement mit mindestens einem bogenförmigen ausgeformten Spannelement ausgestattet ist, welches die Bedachung in eine Bogenform vorspannt.

Eine derartige Bedachung ist aus der DE 1 879 230 bekannt. Bei der bekannten Bedachung wird das Bedachungselement mittels bogenförmiger Spannelemente in eine Bogenform gebracht, so dass Regenwasser an den Rändern ablaufen kann und sich nicht zu einem Wassersack im Bedachungselement sammelt. Die Spannelemente sind schräg zu einer Wickelrichtung angeordnet, so dass sie sich beim Aufwickeln der Bedachung spiralförmig um die Wickelwelle legen.

Die WO 2011/071915 A2 beschreibt eine Bedachung mit einem Bedachungselement, dessen vordere Randkante von einem bogenförmigen Randsteg gebildet ist, an dem die Enden von Ausstellarmen angreifen. Beim Aufwickeln vergrößert sich der Bogenradius des Randsteges.

Die GB 2 270 935, DE 27 48 242 und EP 0 752 340 beschreiben elastische, im entspannten Zustand geradlinige Stangen, die dadurch einem Bedachungselement eine Wölbung verleihen können, dass sie in eine Bogenform vorgespannt werden.

Der Erfindung liegt die Aufgabe zugrunde, die Funktionalität einer gattungsgemäßen Bedachung zu verbessern.

Gelöst wird die Aufgabe durch die in Ansprüchen angegebene Erfindung. Das erfindungsgemäße Bedachungselement ist mit mindestens einem Spannelement ausgestattet, wobei das Spannelement eine Vorspannung durch Formgebung aufweist. Bei der rollbaren Überdachung, wie bspw. einem Segeltuch oder einer Markise, ist das Spannelement annähernd quer zu der Aufrollrichtung des Bedachungselementes angeordnet. Die Spannelemente erlauben dabei, das Bedachungselement auch bei heftigem Regen als Regenschutz zu verwenden. Die quer zur Aufrollrichtung vorgesehenen Spannelemente verhindern dabei das Ansammeln von Regenwasser in dem stoffartigen Bedachungselement. Diese sind dabei derartig ausgebildet, dass dem stoffartigen Bedachungselement eine ausreichende Spannung verliehen wird, so dass auch bei heftigen und dauerhaften Regengüssen das Regenwasser seitlich an der Überdachung abläuft. Es kann auch weiterhin eine schräge Installation des Bedachungselementes vorgesehen sein, bei der das Wasser frontseitig oder rückseitig in eine Rinne aufgenommen oder abgeleitet wird.

Der wesentliche Vorteil des Spannelementes ist, dass die stabilen Eigenschaften beispielsweise einer Korbmarkise auf ein aufrollbares Bedachungselement übertragen werden. Korbmarkisen sind feste Bedachungselemente, welche formunveränderlich sind und weder ein- noch ausgefahren werden können. Diese weisen ein stabiles Gerüst auf, um dem darauf gespannten Stoff eine feste Form zu geben und bei Regen eine Sackbildung zu verhindern.

Die hohe Stabilität der erfindungsgemäßen Bedachung wird durch die Verwendung von aufrollbaren Spannelementen gewährleistet. Die Spannelemente sind dabei einfach mit dem stoffartigen Bedachungselement auf eine dafür vorgesehene Welle aufrollbar. Hierzu besitzen die Spannelemente eine ausreichende Elastizität, um einerseits das Bedachungselement im ausgefahrenen Zustand ausreichend auszusteifen und zum anderen im aufgerollten Zustand den Stoff des Bedachungselementes oder die Aufwickelrolle nicht zu beschädigen, sowie flach an der Wickelwelle anzuliegen. Das Spannelement wird bei einer Vorspannung durch Formgebung mithilfe einer Formverleimung geformt.

Weiterhin kann das Spannelement auch für die Bedachung beispielsweise eines LKWs oder dessen Anhängers verwendet werden. Eine solche Bedachung sieht dabei vor, die Spannelemente während der Fahrt in eine flache Position zu zwingen und bei Abstellen des Fahrzeuges den Zwang zu lösen und eine Auswölbung der Bedachung zu erlauben. Dies ist vorteilhaft, da die maximale Bauhöhe während der Fahrt der Fahrzeuge als Stauraum ausgenutzt wird, während gleichzeitig beim Abstellen des Fahrzeugs eine Ansammlung von größeren Wassermengen auf der Bedachung vermieden wird. Die Wasseransammlungen verursachen erhöhte Wartungsarbeiten, da beispielsweise der Fahrer bei jeder Inbetriebnahme des Fahrzeugs die Bedachung auf solche Wasseransammlungen überprüfen muss. Weiterhin ist auch insbesondere bei kaltem Winterwetter die Gefahr gegeben, dass sich Eisplatten oder -blöcke auf der Bedachung bilden und diese sich während der Fahrt von dem Fahrzeug lösen und damit eine Gefahrenquelle für andere Verkehrsteilnehmer darstellen. Mit dem Einsatz des Spannelements bei der Bedachung solcher Fahrzeuge werden Wartungsarbeiten reduziert sowie das Gefahrenrisiko verringert.

Wesentlich für die Spannelemente ist deren Vorspannung, welche es erlaubt eine bogenförmige Ausgestaltung der Bedachung auch bei heftigem Regen zu gewährleisten. Diese Vorspannung wird durch Formgebung erreicht. Das Spannelement kann beispielsweise fest mit dem Bedachungselement verbunden sein. Hierzu können Haken, Ösen, Schlaufen oder Taschen verwendet werden. Wesentlich für eine solche Verspannung ist, dass das Spannelement breiter als das Bedachungselement selbst ist. Bei einem Ausrollen des Bedachungselementes wird das Spannelement in eine Bogenform gezwungen. Diese Bogenform überträgt sich weiter auf das stoffartige Bedachungselement und gewährleistet damit ein Ablaufen des Regenwassers.

Zur Formgebung des Spannelementes dient beispielsweise ein mehrschichtiger Aufbau des Spannelements, wobei die einzelnen Schichten jeweils zueinander eine Vorspannung aufweisen. Dies kann beispielsweise dadurch geschehen, dass die einzelnen Schichten in ihrer Länge variieren. Werden diese Schichten dann so miteinander verklebt, dass sich die Enden einer jeden Schicht decken, so wird eine Vorspannung erzeugt. Wichtig hierbei ist, dass sich die Schichten gegen die Biegerichtung jeweils verkürzen.

Die Schichten des Spannelements können dabei aus unterschiedlichem Material geformt sein. Insbesondere hat sich vorteilhafterweise eine Ausbildung von Abschnitten gleichen Materials entlang des Querschnitts des Spannelements ergeben. So werden beispielsweise in einem ersten Abschnitt Schichten mit faserverstärktem Kunststoff, sogenanntem Carbon, in einem zweiten Abschnitt einfacher Kunststoff und in einem weiteren Abschnitt glasfaserverstärkter Kunststoff verwendet. Eine geeignete Auswahl der Materialien erlaubt es, ein hoch flexibles, widerstandsfähiges und wetterfestes Spannelement zu formen. Weiterhin können die Spannelemente dadurch bezüglich Gewicht, einer hohen Längssteifigkeit, Federsteifigkeit und Federelastizität optimiert werden. Hierbei bieten sich insbesondere kohlenstofffaserverstärkter Kunststoff, glasfaserverstärkter Kunststoff, amiefaserverstärkter Kunststoff, naturfaserverstärkter Kunststoff, wood-plastic composites, Holz, Metall, einfacher Kunststoff oder eine Kombination dieser Stoffe an.

Für Anwendungen mit besonderen Ansprüchen an das Spannelement kann zumindest im Bereich hoher Spannung dieses verstärkt ausgebildet sein, vorzugsweise mit Carbon. Hierzu kann beispielsweise bei ansonsten geringen Produktionskosten ein Teil des Spannelements oder nur ein Teil einer Schicht aus Carbon geformt sein. Durch die Verwendung von besonders beanspruchbarem Material kann die Leistungsfähigkeit des Spannelements wesentlich erhöht werden.

In einer besonders vorteilhaften Ausführungsform weist das wenigstens eine Spannelement zumindest im Bereich hoher Spannung eine Biegung und in den Randbereichen unterschiedliche Biegungen auf, wobei diese abschnittsweise unterschiedlichen Biegungen eine zur Mitte hin absteigenden Radius aufweisen. Damit wird der mittige Bereich mit einer höheren Vorspannung als der Randbereich versehen. Die Mitte des Spannelementes ist höheren Zugbelastungen durch das Spannen des stoffartigen Bedachungselementes ausgesetzt. Die hohe Vorspannung in diesem Bereich wirkt der besonderen Belastung entgegen. Im Randbereich ist eine solche hohe Vorspannung nicht notwendig. Eine solche Ausführungsform ist besonders vorteilhaft bei Spannelementen von beispielsweise mehr als sechs Metern Länge. Der Randbereich kann dabei mit einer leichten Biegung oder flach ausgebildet sein. Dies erleichtert insbesondere die Befestigung der Spannelemente des stoffartigen Bedachungselementes in beispielsweise Haken, Ösen oder Taschen im Randbereich.

Weiterhin können zur Verbesserung der Eigenschaften des Spannelementes im Bereich hoher Spannung zumindest zwei Schichten teilweise beabstandet ausgebildet sein. Der dadurch entstehende Hohlraum erlaubt den darunter liegenden Schichten, sich zusätzlich zu verformen, ohne die über den Hohlraum angeordneten Schichten zu beanspruchen. Dies kann beispielsweise Verwendung finden bei hohen Ansprüchen an das Spannelement in Kombination mit einem geringen Gewicht und geringen Herstellungskosten. Es können in einer solchen Ausführungsform zum Einen einfachere Materialien verwendet werden und zum Anderen die Leistungsfähigkeit erhöht werden.

Die mehrschichtige Ausgestaltung und eine spezielle Ausführungsform können es erforderlich machen, dass die Oberfläche des Spannelements zumindest teilweise durch ein Füllmaterial ausgeglichen werden muss. Beispielsweise für den Fall, dass ein Hohlraum verwendet wird oder eine Verstärkungsschicht sich nicht über die gesamte Fläche des Spannelements erstreckt. So ergeben sich mitunter unerwünschte Beanstandungen, beispielsweise im Randbereich des Spannelements. Diese müssen, um eine gute Funktionalität mit dem Bedachungselement zu gewährleisten, nivelliert werden. So ist es wichtig, dass das stoffartige Bedachungselement keine Falten über dem Spannelement wirft, da sich dies beim Aufrollen des Bedachungselements negativ auf den verwendeten Stoff auswirken kann und zu dessen frühzeitiger Ermüdung und kostenintensiver Reparatur oder Ersatz führen kann.

Das Bedachungselement weist zur Aufnahme des zumindest einen Spannelements Ausnehmungen auf. Diese Ausnehmungen stellen sicher, dass das Spannelement fest mit dem Bedachungselement verbunden ist. Dies ist insbesondere von Bedeutung in ausgerolltem Zustand sowie zur Sicherstellung, dass das Spannelement an einer festen Position während des Aufrollens auf eine Aufrollwelle gehalten wird. Die Ausnehmungen können dabei als Einschubleiste oder Tasche ausgebildet sein, dies bietet sich zum einen besonders im Randbereich des Bedachungselements an. Solche Einschubleisten oder Taschen können beispielsweise zur Vorspannung des Spannelements verwendet werden. Weiterhin können die Ausnehmungen als Schlaufe, Öse oder Öffnung ausgebildet sein.

Diese Ausgestaltungen bieten sich insbesondere im mittigen Bereich des Bedachungselements an, da hier die Verbindung zwischen dem Bedachungs- und Spannelement gewährleistet sein muss. Die Ausnehmungen können auf der Ober- oder Unterseite des Bedachungselementes vorgesehen sein. Abhängig von der speziellen Anwendung bietet sich die untere oder obere Seite des Bedachungselements besonders an. Beispielsweise kann bei höherem ästhetischen Anspruch an da Bedachungselement das Spannelement auf der Oberseite und somit von unten nicht sichtbar angebracht sein. Bei erhöhten Ansprüchen an die Stabilität kann das Spannelement auf der Unterseite des Bedachungselements sein. Dabei wird eine erhöhte Kraftübertragung direkt auf den Stoff des Bedachungselements gewährleistet.

Die Erfindung wird im Weiteren anhand der Figuren näher erläutert.

Es zeigt
- Fig. 1: in einer perspektivischen Ansicht eine als Sonnensegel ausgebildet Bedachung mit Spannelementen,
- Fig. 2: in einer perspektivischen Ansicht eine als Markise ausgebildete Bedachung mit Spannelementen,
- Fig. 3: in einer perspektivischen Ansicht eine Bedachung mit einer durch die Spannelemente gebildeten Stoffrinne,
- Fig. 4: einen Querschnitt eines aus zwei Leisten gebildeten Spannelementes,
- Fig. 5: einen Querschnitt eines mit einer Verstärkung versehenen Spannelementes,
- Fig. 6: einen Querschnitt eines aus zumindest teilweise beabstandeten Leisten gebildeten Spannelementes,
- Fig. 7: ein mit einem zusätzlichen Zugelement verspanntes Spannelement,
- Fig. 8: eine alternative Ausgestaltung eines aus beabstandeten Leisten gebildeten Spannelementes,
- Fig. 9: einen Querschnitt eines aus teilweise beabstandeten Leisten gebildetes Spannelement zur Bildung einer Stoffrinne,
- Fig. 10: eine Draufsicht eines Bedachungselementes, welches mithilfe von in Taschen eingebetteten Spannelementen in eine Wölbung gezwungen wird,
- Fig. 11: eine alternative Ausgestaltung der Verbindungen zwischen Bedachungs- und Spannelement,
- Fig. 12: einen Querschnitt einer Fahrzeugbedachung mit einem Spannelement in ausgestelltem Zustand und
- Fig. 13: einen Querschnitt einer Fahrzeugbedachung in gespanntem Zustand,
- Fig. 14: eine Draufsicht auf ein herkömmliches Segeltuch ohne Spannelemente,
- Fig. 15: eine Draufsicht auf ein Segeltuch mit Spannelementen und
- Fig. 16: einen Querschnitt eines mit abschnittsweise unterschiedlich ausgebildeten Biegungen geformten Spannelementes.

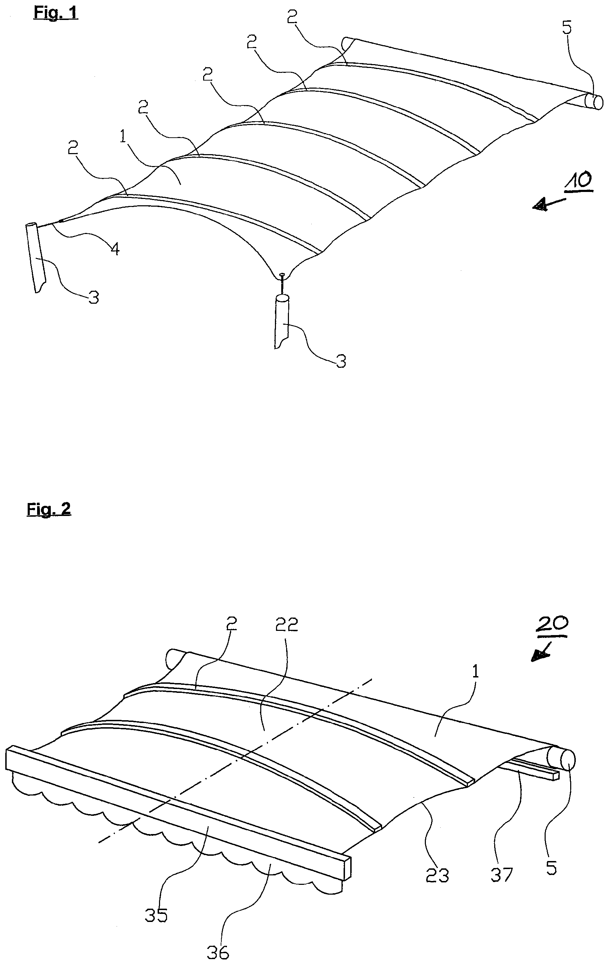

Fig. 1 zeigt eine als Sonnensegel 10 ausgebildete Bedachung mit quer zur Aufrollrichtung eines Bedachungselementes 1 verlaufenden Spannelementen 2. Das Bedachungselement 1 wird mithilfe von Zugseilen 4 über zwei Spannmäste 3 aufgespannt und von der Wickelwelle 5 abgewickelt. Das Spannelement weist dabei eine Vorspannung auf, welche das Bedachungselement 1 in eine Wölbung 22 zwingt. Diese nach oben ausgestellte Wölbung 22 erlaubt es, das Sonnensegel 10 auch bei heftigem Regen als Regenschutz zu verwenden. Der Regen läuft damit seitlich an dem Sonnensegel 10 ab.

Das Bedachungselement 1 ist im Front- und Seitenbereich U-förmig geschnitten, um eine ideale Kraftübertragung bei dem Spannen des Sonnensegels 10 über die Zugseile 4 zu ermöglichen.

Die Spannelemente sind dabei derartig ausgebildet, dass diese eine ausreichende Spannung auf das Bedachungselement 1 ausüben, um die Wölbung 22 zu formen und diese gleichzeitig bei einem Aufwickeln des Bedachungselementes 1 an der Wickelwelle 5 glatt anliegen. Dies ist notwendig, damit weder der Stoffteil des Bedachungselementes 1 noch die Wickelwelle 5 beschädigt werden oder es zu frühzeitiger Materialermüdung des aufgewickelten Stoffes kommt. Dieser muss sonst kostspielig repariert oder ersetzt werden. Der Auf- und Abwickelvorgang kann entweder durch ein Motorgetriebe oder manuell erfolgen.

Die Spannelemente 2 sind mit einer Vorspannung durch Verspannen des Spannelementes mit dem Bedachungselement und/oder durch Formgebung versehen. Die Spannelemente müssen dabei höchste Anforderungen an Gewicht, Flexibilität, Federsteifigkeit und Federelastizität erfüllen. Die Spannelemente sollen auch nach häufigem Auf- und Abwickeln noch stets flexibel sein und die gewölbte Form annehmen. Weiterhin ist es eine wesentliche Voraussetzung für die Verwendung der Spannelemente 2, dass diese ein äußerst geringes Gewicht aufweisen, da der Stoff des Bedachungselementes 1 nicht zusätzlich belastet werden darf. Zum einen wird dadurch das Spannen des Sonnensegels 10 erschwert und zum anderen ist ein erhöhtes Gewicht eine zusätzliche Belastung für Stoff und Nähte des Bedachungselementes 1.Eine frühzeitige Ermüdung des Materials wird durch Gewichtsreduzierung vermieden.

Das Spannelement 2 wird auf ganzer Breite der Stofffläche des Bedachungselementes 1 befestigt, sodass beide Enden des Spannelementes 2 jeweils an der Außenkante der Stofffläche fixiert und wenigstens die Mitte des Spannelements 2 eine Verbindung zur Stofffläche des Bedachungselementes 1 aufweist. Die mit dem Spannelement 2 versehene Stofffläche wird unter Zugspannung am freien Stoffende auf eine Wickelwelle5 aufgewickelt. Dabei wird das bogenförmig ausgeformte Spannelement 2 durch den beim Aufwickeln entstehenden Anpressdruck des Stoffes des Bedachungselementes 1 plan- und geradlinig an die Wickelwelle 5 angedrückt. Das Anlagen des Spannelementes 2 an die Wickelwelle 5 ist zwingend notwendig, da ansonsten bei nicht komplett anliegendem Spannelement 2 beim Aufwickeln auf die Wickelwelle 5 abschnittsweise eine Wölbung auf der Wickelwelle 65 entsteht. Diese erhöht den Wickelradius an der Auswölbung deutlich. Dadurch kann die aufzuwickelnde Stofffläche des Bedachungselementes 1 nicht mehr unter gleichmäßiger Spannung auf die Wickelwelle 5 aufgewickelt werden. Es bilden sich Wickelfalten und darüber hinaus ist ein großer Wickelradius erforderlich, der die Ausgestaltung insbesondere bei großen Sonnensegeln 10 begrenzt. Aus praktischen sowie ästhetischen Gründen ist anzustreben, eine Wickelwelle 5 mit kleinem Radius auszubilden. Wird der Stoff mit dem Spannelement 2 abgewickelt, entspannt sich dieses zu der vorgeformten Wölbung 22 und formt mit dem Stoff des Bedachungselementes 1 eine Art leicht nach oben gewölbtes Dach. Auf den Stoff fallender Regen sammelt sich nicht mehr in der Mitte, sondern fließt vielmehr zu den Seiten und Kanten des Bedachungselementes 1 ab. Wird die Stofffläche des Bedachungselementes 1 wieder auf die Wickelwelle 5 gewickelt, legt sich das zuvor ausgeformte Dach wieder plan an die Wickelwelle5 an.

Fig. 2 zeigt eine als Markise 20 ausgebildete Bedachung mit einem Bedachungselement 1 und Spannelementen 2. Ähnlich dem in Fig. 1 beschriebenen Sonnensegel wird bei einer Markise 20 die Stofffläche des Bedachungselementes auf eine Wickelwelle 5 auf- und abgewickelt. Die Spannelemente 2 sind dabei mit dem Stoff des Bedachungselementes 1 verbunden, um eine Wölbung auszubilden und das Abfließen von Regenwasser zu ermöglichen sowie die Wassersackbildung zu verhindern. Anders als bei einem Sonnensegel 10 wird bei einer Markise 20 das Spannen des Bedachungselementes 1 nicht durch Zugseile 4, sondern durch ein Zugprofil 35 und eine entsprechende Rahmenverbindung mit einem Träger 37 sichergestellt. Häufig werden hierzu nicht dargestellte Schwenkarme zwischen dem Zugprofil 35 und dem Träger 37 eingespannt, welche über ein gelenk den Abstand zwischen Zugprofil 35 und Träger 37 bestimmen.

Wie in Fig. 1 beschrieben, legt sich das Spannelement 2 beim Aufwickeln des Bedachungselementes 1 auf die Wickelwelle 5 plan an, ohne dabei den Stoff des Bedachungselementes 1 oder die Wickelwelle 5 zu beschädigen. Weiterhin wird einkleiner Radius der Wickelwelle 5 ermöglicht. Aus dekorativen gründen ist das Zugprofil meist mit einem Volant versehen. Da die ästhetischen Ansprüche an eine Markise höher sind als beispielsweise an ein Sonnensegel, sind die Spannelemente 2 vorzugsweise auf der Oberseite des Bedachungselementes 1 angebracht.

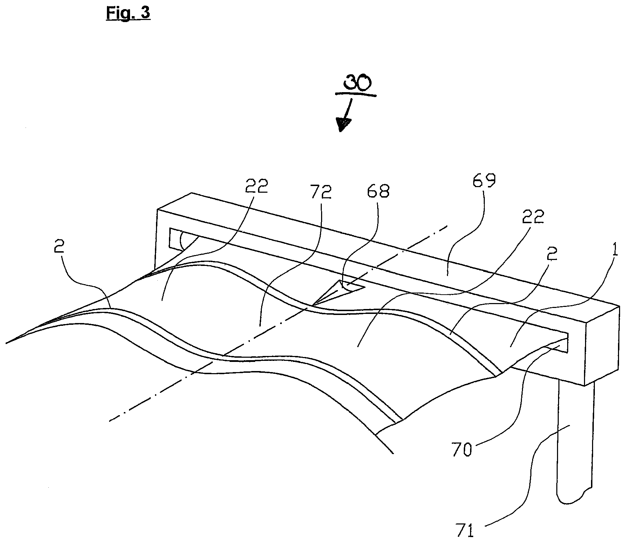

Fig. 3 zeigt eine Bedachung 30 ähnlich wie in Fig. 1 oder 2 beschrieben, jedoch bilden die Spannelemente 2 eine mittig angeordnete Stoffrinne 72. Dies kann unter anderem dann erforderlich sein, wenn die Bedachung 30 besonders breit ausgebildet ist und eine dachartige Spannung der Spannelemente 2 zu einer erhöhten Auswölbung des Stoffes des Bedachungselementes 1 führt. Dies führt weiterhin zu einem erhöhten Radius der Wickelwelle 5. Es werden zwei Wölbungen 22 jeweils randseitig zur Stoffrinne 72 ausgebildet. Fällt Regen auf diese Bedachung 30, so läuft dieser teilweise am Rand des Bedachungselementes 1 ab und im mittigen Bereich wird das Wasser in der Stoffrinne 72 gesammelt. Das gesammelte Wasser kann dann je nach Anordnung entweder nach vorne oder nach hinten durch die Ablauföffnung 68 ablaufen. Dabei kann das Bedachungselement 1 mit mehreren Ablauföffnungen 68 versehen sein, um ein nur teilweise abgewickeltes Bedachungselement 1 verwenden zu können. Weiterhin ist in dieser Ausgestaltung ein Gehäuse 69 vorgesehen. Dieses ist mit einer Öffnung 70 versehen. Das Bedachungselement 1 tritt durch die Öffnung 70 aus, während das Gehäuse 69 die Wickelwelle 5 aufnimmt. Das Gehäuse 69 ist mit einem Ablaufrohr 71 versehen, um das sich in dem Gehäuse ansammelnde Wasser abzuführen.

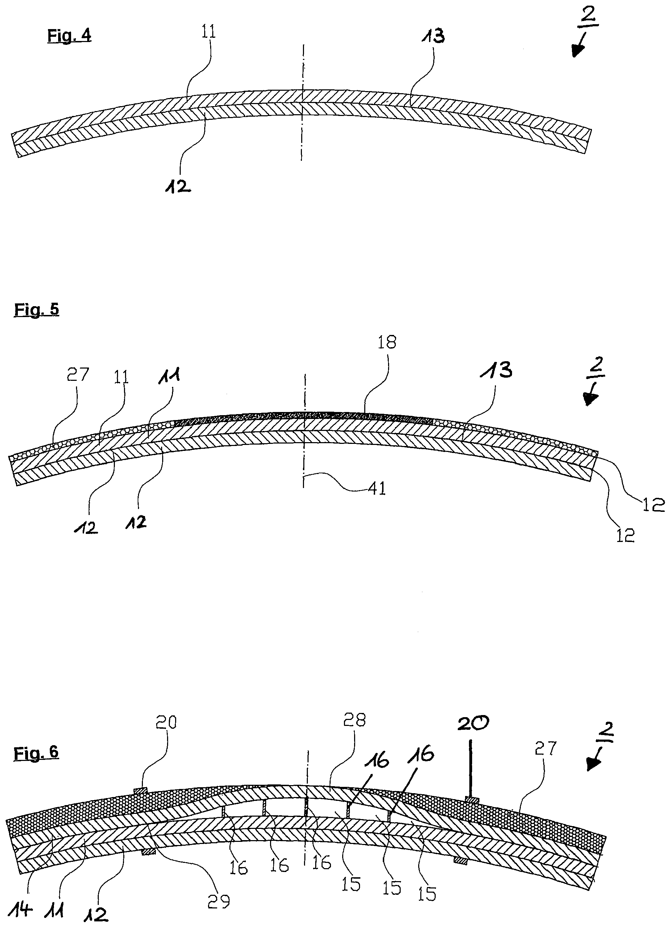

Fig. 4 zeigt ein mehrschichtiges Spannelement 2, bestehend aus einer Leiste 11 und einer damit über einer Verbindungsschicht 13 verbundene Leiste 12. Das Spannelement 2 ist durch Formgebung der Leisten 11, 12 mit einer Vorspannung versehen. Die untere Leiste 12 ist hierbei etwas kürzer als die obere Leiste 11 ausgebildet. An den jeweiligen Rändern der Leiste werden diese zur Deckung angebracht und über die Verbindungsschicht 13 miteinander verbunden, beispielsweise verklebt. Dadurch wird das Spannelement 2 in eine Wölbung gezwungen, welche über Befestigungsmittel mit der Stofffläche eines Bedachungselementes 1 übertagen werden kann. Das Spannelement ist im Normalfall im Außenbereich eingesetzt und ist Sonne und Regen direkt ausgesetzt.

Das Spannelement 2 erfüllt dabei hohe Anforderungen an Langlebigkeit und Witterungsbeständigkeit, insbesondere an Bezug auf die Widerstandfähigkeit gegen Feuchtigkeit, Wärme, Kälte und UV-Strahlung. Weiterhin muss das Spannelement 2 derartig ausgebildet sein, dass ein möglichst geringes Gewicht und ein möglichst kleiner Volumenquerschnitt erzielt werden. Dies wird durch eine entsprechende Auswahl von Materialien ermöglicht. Rollbare Markisen 20 und Sonnensegel 10 besitzen eine nur geringe Zugspannung, welche darauf ausgelegt ist, die jeweiligen Stoffflächen horizontal ohne Durchhang zu spannen. Jedes zusätzliche Gewicht würde diese zu sehr belasten.

Ein kleiner Volumenquerschnitt des Spannelementes 2 ist notwendig, um das Wickelvolumen auf der Wickelwelle 5 möglichst klein zu halten. Dies ist für eine kleine und ästhetische Bauweise wesentlich.

Weiterhin weist das Spannelement 2 eine hohe Lenksteifigkeit gegen Druck und Zug, sowie gegen Stauchung und Dehnung auf. So ist beispielsweise bei Sonnensegeln 10 die Stofffläche, um Faltenbildung zu vermeiden, parallel zur Wickelwelle gespannt. Dadurch entsteht unter anderem Zug und Druck in Längsrichtung, welche durch das Spannelement 2 gehalten werden muss.

Das Spannelement 2 weist darüber hinaus noch eine hohe Federsteifigkeit und Quersteifigkeit auf. Unter Umständen muss das Spannelement 2 einen großen Spannungsbogen von beispielsweise sechs Metern Länge freitragend nach oben ausbilden können. Zusätzlich muss das Gewicht der Stofffläche des Bedachungselementes getragen werden. Bei der Ausgestaltung des Spannelementes 2 ist dabei von großer Bedeutung, dass beispielsweise durch Winddruck die Spannelemente keine Ausweichwölbung durchführen und eine gegenläufige Auswölbung ausbilden.

Weiterhin ist eine dauerhafte und hoch beanspruchbare Federelastizität für das Spannelement 2 gewährleistet. Durch Auf- und Abwickeln des Bedachungselementes 1 wird eine dauernd wechselnde Belastung von planem Anliegen an der Wickelwelle 5 und bogenförmige Auswölbung im abgewickelten Zustand gefordert. Die Spannelemente sollen dabei über mehrere Jahre ohne zusätzlichen Wartungsaufwand oder Austausch im Einsatz bleiben.

Die Leisten 11, 12 des Spannelementes 2 können dabei beispielsweise aus kohlenstofffaserverstärktem Kunststoff, glasfaserverstärktem Kunststoff, aramitfaserverstärktem Kunststoff, naturfaserverstärktem Kunststoff oder wood-plastic composites sowie Holz, Metall oder Kunststoff geformt werden. Weiterhin ist auch eine beliebige Kombination dieser Stoffe möglich. Die Leisten 11, 12 können selbst aus einem Gemisch unterschiedlicher Materialien ausgebildet sein.

Fig. 5 zeigt ein Spannelement 2, wie in Fig. 4 beschrieben, bestehend aus einer ersten leiste 11 und einer zweiten Leiste 12. Dabei ist die Leiste 11 im Bereich hoher Spannung mit einer Verstärkung 18 versehen. Die Verstärkung 18 besteht vorzugsweise aus kohlenstofffaserverstärktem Kunststoff. Hierbei kann beispielsweise bei ansonsten geringen Produktionskosten ein Spannelement 2 geformt werden, welches hohe Anforderungen an die Leistungsfähigkeit erfüllt. Um Material und Kosten zu sparen, wird die Verstärkung 18 nicht ganzflächig aufgetragen, sondern nur in den Breichen hoher Spannung. Dies ist meist im mittigen Bereich, kann allerdings bei anders geformten Spannelementen 2 auch in Randbereichen sein. Da die Verstärkung 18 nur teilweise aufgetragen wird, bilden sich Hohlräume. Diese Hohlräume werden mithilfe eines Füllelementes 27 aufgefüllt und ermöglichen ein flaches Anliegen der Stofffläche des Bedachungselementes 1.

Fig. 6 zeigt eine alternative Ausgestaltung eines Spannelementes 2, wobei neben den Leisten 11, 12 eine weitere Leiste 14 zumindest teilweise beabstandet angebracht ist. Der sich dabei formende Hohlraum 15 kann zusätzlich durch Abstandshalter 16 stabilisiert werden. Der Höhenunterschied im Randbereich des Spannelementes 2 kann ähnlich wie in Fig. 5 mit einem Füllelement 27 ausgeglichen werden. Um ein Zusammenhalten der einzelnen Elemente des Spannelementes 2 zu gewährleisten, sind zusätzlich Klammern 20 vorgesehen. Die Klammern 20 können dabei entweder um den Außenumfang des Spannelementes greifen oder durch eine Ausnehmung verschraubt bzw. vernietet sein. Die Leisten 11, 12, 14 können auch in dieser Ausführung jeweils aus mehreren Schichten aufgebaut sein.

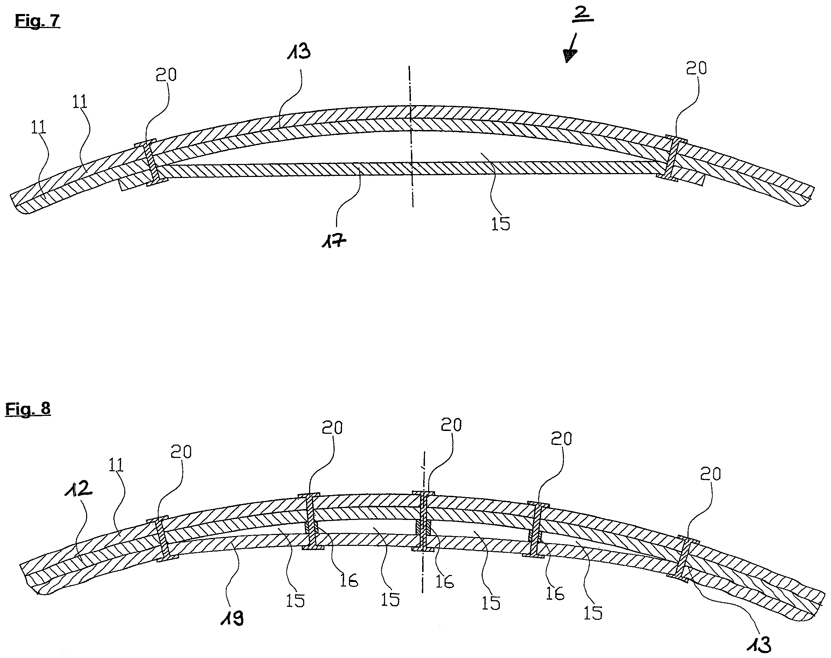

Fig. 7 zeigt ein Spannelement 2, ähnlich wie in Fig. 2 beschrieben, bestehend aus einer Leiste 11, 12. Das Spannelement 2 wird jedoch zusätzlich mithilfe eines Zugelementes 17 vorgespannt. Das Zugelement 17 besteht dabei aus einem gummiartigen Material, welches elastisch ist und eine hohe Zugspannung aufweist. Die Leisten 11, 12 sind über Klammern 20 mit dem Zugelement 17 verbunden. Dabei entsteht ein Hohlraum 15. Dadurch kann beispielsweise der Produktionsprozess des Spannelementes 2 vereinfacht werden, da die Leisten 11, 12 nicht durch Formgebung vorgespannt werden müssen, sondern nachträglich noch mit einer entsprechenden Vorspannung über das Zugelement 17 versehen werden können.

Fig. 8 zeigt eine Ausgestaltung des Spannelementes 2 ähnlich zu der in Fig,. 6 beschriebenen Form. Hierbei wird jedoch eine Leiste 19 unterhalb der Leisten 11, 12 angebracht und der Hohlraum 15 bildet sich im unteren Bereich des Querschnittes des Spannelementes 2 aus.

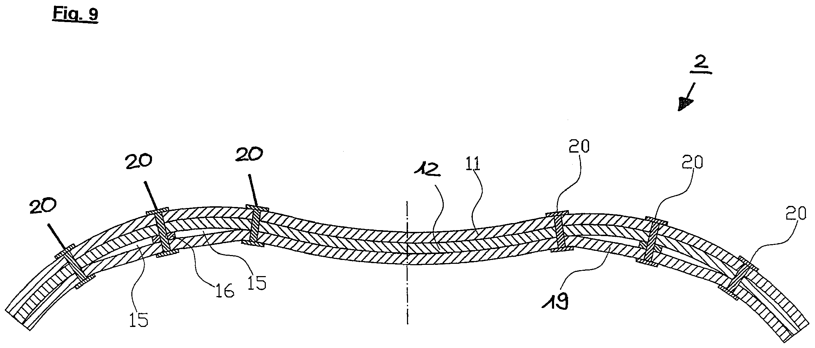

Fig. 9 zeigt einen Querschnitt eines Spannelementes 2, welches eine Doppelwölbung ausbildet. Damit kann beispielsweise eine Bedachung gemäß Fig. 3 realisiert werden. Das Spannelement besteht hier aus Leisten 11, 12, 19, welche in dem gewölbten Bereich mit einem Hohlraum 15 versehen sind. Die einzelnen Leisten 11, 12, 19 werden über Klammern miteinander verbunden.

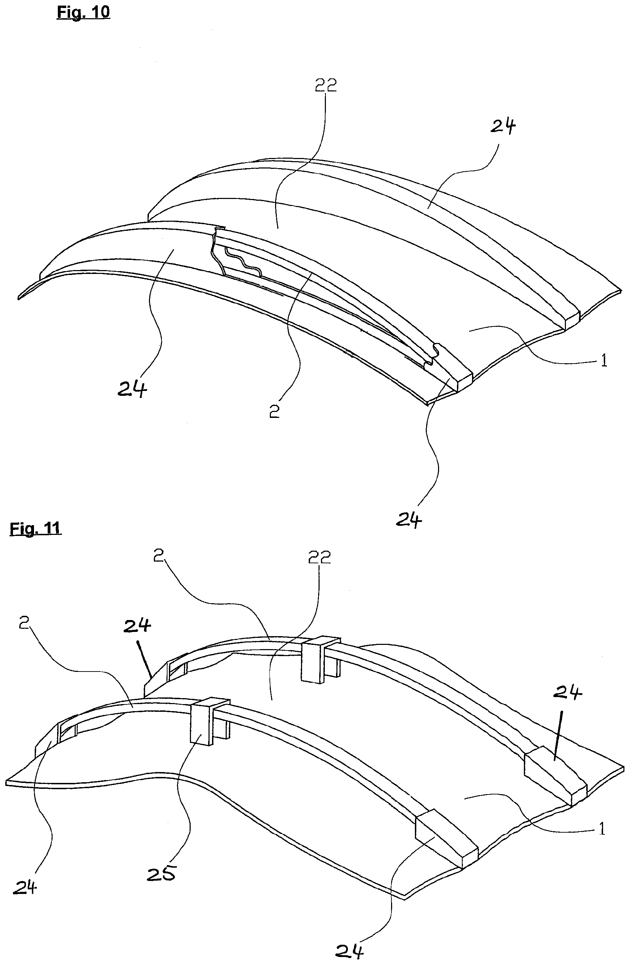

Fig. 10 zeigt das Bedachungselement 1 über Taschen 24 mit Spannelementen 2 verbunden. Die Spannelemente 2 verlaufen hierbei vollständig über die gesamte Breite des Bedachungselemente 1 innerhalb von Taschen 24.. Die vordere Tasche 24 ist dabei zur Illustration nur teilweise dargestellt. Die Vorspannung des Spannelementes 2 wird über die Taschen 24 auf das Bedachungselement 1 übertragen und bildet damit eine dachförmige Wölbung 22 aus. Diese ermöglicht es, die Bedachung als Regenschutz zu verwenden.

Fig. 11 zeigt eine alternative Ausgestaltung der Aufnahme des Spannelementes 2. Hierbei werden Laschen im mittigen Bereich des Bedachungselementes 1 verwendet, um die Stofffläche des Bedachungselementes 1 mit dem Spannelement 2 zu verbinden. Randseitig wird das Spannelement in kurz ausgeformten Taschen 24 aufgenommen. Alternativ ist es auch denkbar, die Spannelemente nicht oberhalb des Stoffes des Bedachungselementes 1 anzubringen, sondern unterhalb zu befestigen. Hierbei können die Taschen 24 einfach an der Unterseite angebracht werden und Laschen zur Führung des Spannelementes vorgesehen sein.

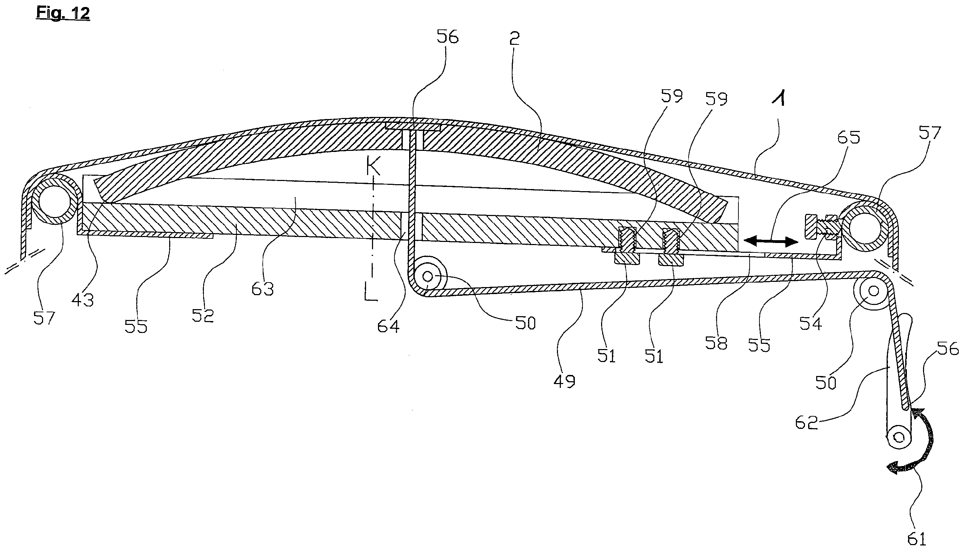

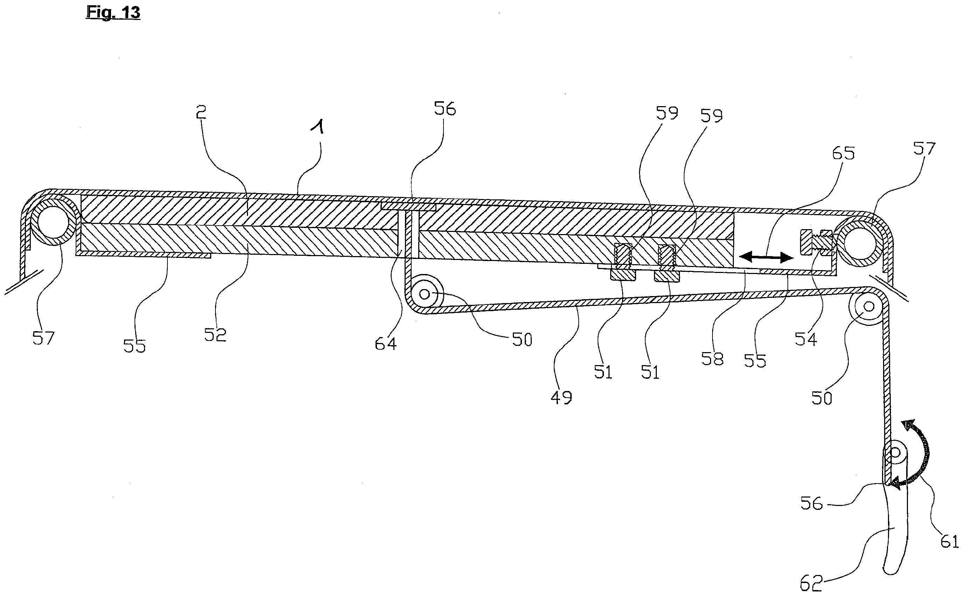

Fig. 12 zeigt eine alternative Ausführungsform der Bedachung für Fahrzeuge, beispielsweise LKW's oder deren Anhänger. Die Bedachung wird hierbei während der Fahrt in eine flache Position gezwungen (Fig. 13), und bei Abstellen des Fahrzeugs wird der Zwang gelöst und eine Auswölbung der Bedachung erlaubt (Fig. 12). Damit kann die maximale Bauhöhe des Fahrzeugs während der Fahrt als Stauraum benutzt werden. Beim Abstellen des Fahrzeugs wird durch das Ausstellen der Bedachung die Ansammlung von Wasser vermieden. Hierzu wird unterhalb des Bedachungselementes 1 des Fahrzeugs ein Spannelement 2 angebracht. Das Spannelement 2 kann dabei über einen Seilzug 49, der über Umlenkrollen 50 auf einen Hebel 62 geführt ist, gespannt und entspannt werden. Hierzu kann der Hebel gemäß Pfeil 61 umgelegt werden und er über die Befestigung 56 angebrachte Seilzug 49 verkürzt oder verlängert werden. Wird der Hebel 62 umgelegt, so wird über die Befestigung 56 das Spannelement nach unten gedrückt und es ergibt sich eine plane Oberfläche. Diese Stellung ist zum betrieb des Fahrzeugs geeignet. Beim Abstellen des Fahrzeugs wird der Hebel 62 erneut betätigt und das Spannelement 2 freigegeben, wodurch sich eine Wölbung des Bedachungselementes 1 ausbildet und Regen abfließen kann.

Zur Kostenreduzierung soll das Spannelement in einer Normgröße hergestellt werden. Um dies für beliebige Baubreiten von Fahrzeugen nutzen zu können, ist eine Vorrichtung vorgesehen, welche gemäß Pfeil 65 das Spannelement 2 zwischen den Rahmenrohren des Aufbaus positioniert. Hierbei sind Bügel 55 um die Rahmenrohre 57 geführt, wobei zumindest einseitig diese mit einem Langloch 58 versehen sind. Feststellschrauben 51 können entlang des Langlochs 58 verschoben werden und damit eine Querstrebe 52 an die Breite des Fahrzeugs angepasst werden.

Fig. 13 zeigt eine Anordnung gemäß Fig. 12 in gespanntem Zustand. Bei Inbetriebnahme des Fahrzeugs wird dadurch die maximale Bauhöhe eingehalten.

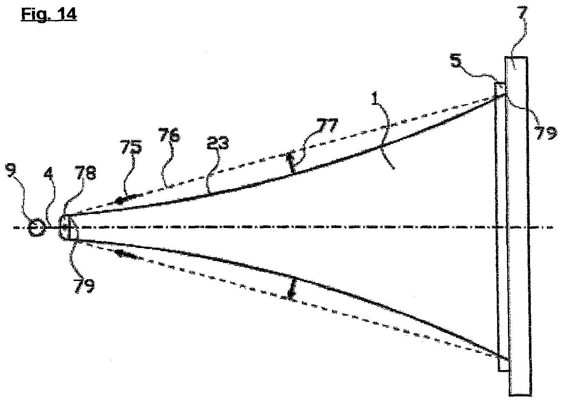

Fig. 14 zeigt ein herkömmliches aufrollbares dreieckiges Sonnensegel gemäß dem Stand der Technik,. Ein Spannmast 9 ist über ein Zugseil 4 mit einem Sonnensegel verbunden. Das Bedachungselement 1 ist am anderen Ende mit eine Zugplatte 78 verbunden. Die Zugplatte 78 fasst das freie Ende des Bedachungselements 1 ein und fixiert dieses gleichzeitig. Ein bogenförmiger Hohlschnitt 23 verhindert, dass das Kanten des Bedachungselements 1 ohne Zug durchhängen. Der Hohlschnitt 23 wird beim Zuschnitt des Bedachungselements 1 bereits berücksichtigt. Ohne diesen Hohlschnitt 23 ist keine effektive Spannung des Bedachungselements 1 möglich. Die gestrichelte Linie zeigt an, dass durch den Hohlschnitt 23 ein Großteil der Dreiecksfläche des Bedachungselements 1 nicht abgedeckt werden kann.

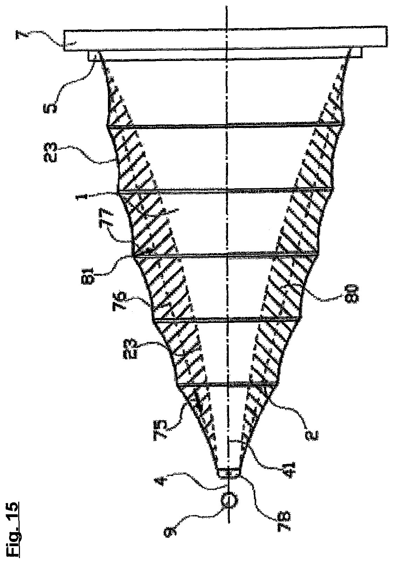

Fig. 15 zeigt ein erfindungsgemäßes Bedachungselement 1 mit Spannelementen 2. Der weitere Aufbau entspricht dem aus Fig. 14. Die Spannelemente 2 erlauben es nun den Hohlschnitt 23 auf die bereiche zwischen jeweils zwei Spannelementen 2 zu beschränken. Damit wird der Verlust an bedachter Fläche reduziert und kann unter Umständen wie hier dargestellt über eine einfache Dreiecksfläche hinausgehen.

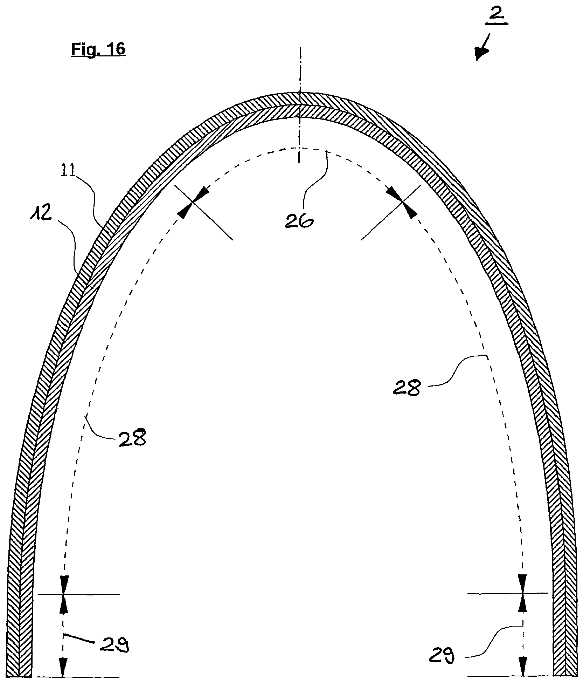

Fig. 16 zeigt ein mehrschichtig ausgebildetes Spannelement 2, wobei dieses mit abschnittsweise unterschiedlichen Biegungen 26, 28, 29 ausgebildet ist. Im Bereich der höchsten Belastung des Spannelementes 2 ist die Biegung 26 mit einem kleinen Radius ausgebildet. Damit wird das Spannelement 2 durch Formgebung der Leisten 11, 12 mit einer Vorspannung versehen, welche insbesondere bei langen Spannelementen 2 eine hohe Tragkraft aufweisen muss. In den Randbereichen des Spannelementes 2 ist eine hohe Vorspannung nicht notwendig. In diesem Ausführungsbeispiel ist das Spannelement 2 mit drei Abschnitten mit jeweils unterschiedlicher Biegung 26, 28, 29 ausgebildet. Das Spannelement 2 ist leicht gewölbt in einem ersten Randabschnitt. Im Endbereich ist in diesem Ausführungsbeispiel das Spannelement 2 mit einem geraden Ende versehen.

### Bezugszeichenliste

- 1: Bedachungselement
- 2: Spannelement
- 3: Spannmast
- 4: Zugseil
- 5: Wickelwelle
- 10: Sonnensegel
- 11: Leiste
- 12: Leiste
- 13: Verbindungsschicht
- 14: Leiste
- 15: Hohlraum
- 16: Abstandhalter
- 17: Zugelement
- 18: Verstärkung
- 19: Leiste
- 20: Markise
- 22: Wölbung
- 23: Hohlschnitt
- 24: Tasche
- 25: Tasche
- 27: Füllelement
- 30: Bedachung
- 35: Zugprofil
- 36: Volant
- 37: Träger
- 49: Seilzug
- 50: Umlenkrolle
- 51: Feststellschraube
- 52: Querstrebe
- 54: Haltevorrichtung
- 55: Haltebügel
- 56: Befestigung
- 57: Rahmenrohr
- 58: Langloch
- 59: Feststellöffnung
- 61: Pfeil
- 62: Hebel
- 63: Vertiefung
- 64: Ausnehmung
- 65: Pfeil
- 68: Ablauföffnung
- 69: Gehäuse
- 70: Öffnung
- 71: Ablaufrohr
- 72: Stoffrinne

## Patentansprüche

1. Bedachung (30) zur Verwendung als Sonnen- oder Regenschutz, umfassend ein stoffartiges Bedachungselement (1) und eine Befestigungsvorrichtung, wobei das Bedachungselement (1) mit mindestens einem bogenförmig ausgeformten Spannelement (2) ausgestattet ist, welches die Bedachung in eine Bogenform vorspannt, wobei das Bedachungselement als auf eine Wickelwelle (5) aufrollbares Sonnensegel (10) oder Markise (20) ausgebildet ist, **dadurch gekennzeichnet, dass** das Spannelement (2) annähernd quer zur Aufrollrichtung des Bedachungselementes (1) angeordnet ist und im aufgewickelten Zustand plan- und geradlinig an die Wickelwelle (5) angedrückt wird, wobei es eine ausreichende dauerhaft hoch beanspruchbare Elastizität aufweist, um durch den beim Aufrollen entstehenden Anpressdruck von der Bogenform in eine Gestrecktlage gebracht zu werden und um sich nach Aufheben der Kraft beim Abwickeln des Bedachungselementes (1) von der Wickelwelle (5) wieder in die vorgeformte Bogenform zu entspannen.

2. Bedachung (30) nach Anspruch 1, **dadurch gekennzeichnet, dass** das wenigstens eine Spannelement (2) mehrschichtig aufgebaut ist, wobei die einzelnen Schichten jeweils zueinander eine Vorspannung aufweisen.

3. Bedachung (30) nach einem der Ansprüche 1 oder 2, **dadurch gekennzeichnet, dass** das wenigstens eine Spannelement (2) mehrschichtig aufgebaut ist, wobei die Schichten von Leisten ausgebildet sind, die aus faserverstärktem Kunststoff bestehen.

4. Bedachung (30) nach einem der vorhergehenden Ansprüche, **dadurch gekennzeichnet, dass** das wenigstens eine Spannelement (2) mehrschichtig aufgebaut ist, wobei zwei Schichten zumindest teilweise voneinander beabstandet sind.

5. Bedachung (30) nach einem der Ansprüche 3 bis 4, **dadurch gekennzeichnet, dass** die Schichten und Leisten des wenigstens einen Spannelementes (2) aus unterschiedlichem Material geformt sind, und/ oder dass die Schichten des wenigstens einen Spannelementes (2) Abschnitte bilden, welche aus dem gleichen Material geformt sind.

6. Bedachung (30) nach einem der Ansprüche 1 bis 5, **dadurch gekennzeichnet, dass** das wenigstens eine Spannelement (2) zumindest im Bereich hoher Spannung verstärkt ausgebildet ist, vorzugsweise durch kohlenstofffaserverstärkten Kunststoff.

7. Bedachung (30) nach einem der Ansprüche 1 bis 6, **dadurch gekennzeichnet, dass** das wenigstens eine Spannelement (2) zumindest im Bereich hoher Spannung eine Biegung (26) und in den Randbereichen Biegungen (28, 29) aufweist, wobei diese abschnittsweise unterschiedlichen Biegungen (26, 28, 29) einen zur Mitte hin absteigenden Radius aufweisen.

8. Bedachung (30) nach Anspruch 7, **dadurch gekennzeichnet, dass** das wenigstens eine Spannelement (2) im Bereich hoher Spannung aus zumindest zwei teilweise beabstandeten Schichten oder Leisten geformt ist.

9. Bedachung (30) nach einem der Ansprüche 1 bis 8, **dadurch gekennzeichnet, dass** die Oberfläche des Spannelements (2) zumindest teilweise durch ein Füllelement ausgleichbar ist.

10. Bedachung (30) nach einem der Ansprüche 1 bis 9, **dadurch gekennzeichnet, dass** das Spannelement (2) aus Karbonfasern, Glasfasern, Holz, Metall, Kunststoff oder einer Kombination dieser Stoffe geformt ist.

11. Bedachung (30) nach einem oder mehreren der Ansprüche 1 bis 10, dass das Bedachungselement (1) zumindest eine Ausnehmung zur Aufnahme zumindest eines Spannelementes (2) aufweist.

12. Bedachung (30) nach Anspruch 11, **dadurch gekennzeichnet, dass** die Ausnehmung als Einschubleiste, Tasche (24, 25), Schlaufe, Öse oder Öffnung ausgebildet ist.

13. Bedachung (30) nach einem der Ansprüche 11 oder 12, **dadurch gekennzeichnet, dass** die Ausnehmung auf der Ober- oder Unterseite des Bedachungselements (1) vorgesehen ist.

## Claims

1. Roofing (30) for use as a sunshade or rain shelter, comprising a fabric-like roofing element (1) and a fastening apparatus, the roofing element (1) being equipped with at least one arcuate tension element (2) which pretensions the roofing in an arcuate shape, the roofing element being designed as an awning (10) or sunblind (20) that can be rolled up onto a winding shaft (5), **characterised in that** the tension element (2) is arranged approximately transversely to the rolling-up direction of the roofing element (1) and, in the wound-up state, is pressed against the winding shaft (5) in a planar and rectilinear manner, said tension element having a sufficient permanently highly durable resilience to be brought into a stretched position by means of the contact pressure from the arcuate shape that occurs when rolling up and in order to relax back into the preformed arcuate shape after the force is removed when the roofing element (1) unwinds from the winding shaft (5).

2. Roofing (30) according to claim 1, **characterised in that** the at least one tension element (2) is multilayered, the individual layers each having a pretension relative to one another.

3. Roofing (30) according to either claim 1 or claim 2, **characterised in that** the at least one tension element (2) is multilayered, the layers being formed by strips which consist of a fibre-reinforced plastics material.

4. Roofing (30) according to any of the preceding claims, **characterised in that** the at least one tension element (2) is multilayered, two layers being spaced apart from one another at least in part.

5. Roofing (30) according to either claim 3 or claim 4, **characterised in that** the layers and strips of the at least one tension element (2) are made of a different material, and/or **in that** the layers of the at least one tension element (2) form portions which are made of the same material.

6. Roofing (30) according to any of claims 1 to 5, **characterised in that** the at least one tension element (2) is reinforced at least in the region of high tension, preferably by a carbon fibre-reinforced plastics material.

7. Roofing (30) according to any of claims 1 to 6, **characterised in that** the at least one tension element (2) comprises a bend (26) at least in the region of high tension and bends (28, 29) in the edge regions, these bends (26, 28, 29), which are different in portions, having a radius which decreases towards the centre.

8. Roofing (30) according to claim 7, **characterised in that**, in the region of high tension, the at least one tension element (2) is formed by at least two layers or strips that are spaced apart in part.

9. Roofing (30) according to any of claims 1 to 8, **characterised in that** the surface of the tension element (2) can be even out at least in part by a filling element.

10. Roofing (30) according to any of claims 1 to 9, **characterised in that** the tension element (2) is made of carbon fibres, glass fibres, wood, metal, plastics material or a combination of these materials.

11. Roofing (30) according to one or more of claims 1 to 10, **characterised in that** the roofing element (1) comprises at least one recess for receiving at least one tension element (2).

12. Roofing (30) according to claim 11, **characterised in that** the recess is designed as a slide-in strip, slot (24, 25), loop, eyelet or opening.

13. Roofing (30) according to either claim 11 or claim 12, **characterised in that** the recess is provided on the top or the bottom of the roofing element (1).

## Revendications

1. Couverture (30) destinée à être utilisée comme protection contre le soleil ou la pluie, comprenant un élément de couverture (1) semblable à une étoffe et un dispositif de fixation, dans laquelle l'élément de couverture (1) est pourvu d'au moins un élément tendeur (2) en forme d'arc lequel contraint la couverture en une forme d'arc, dans laquelle l'élément de couverture est réalisé en tant que store ou auvent susceptible d'être enroulé sur un arbre d'enroulement (5), **caractérisé en ce que** l'élément tendeur (2) est agencé approximativement transversalement à la direction d'enroulement de l'élément de couverture (1) et qui, à l'état enroulé, est appuyé de manière plane et en ligne droite contre l'arbre d'enroulement (5), dans laquelle il présente une élasticité élevée suffisamment durable pour pouvoir être passé de la forme d'arc à une position d'extension sous l'effet de la pression d'appui générée lors de l'enroulement et de se détendre à nouveau pour retrouver la forme d'arc préformée lors du relâchement de la force lors du déroulement de l'élément de couverture (1).

2. Couverture (30) selon la revendication 1, **caractérisée en ce que** l'au moins un élément tendeur (2) présente une structure multicouche, dans laquelle les couches individuelles présentent chacune une précontrainte par rapport aux autres.

3. Couverture (30) selon la revendication 1 ou 2, **caractérisée en ce que** l'au moins un élément tendeur (2) présente une structure multicouche, dans laquelle les couches sont formées par des bandes de matière plastiques renforcées par des fibres.

4. Couverture (30) selon l'une des revendications précédentes, **caractérisée en ce que** l'au moins un élément tendeur (2) présente une structure multicouche, dans laquelle deux couches sont espacées l'une de l'autre au moins en partie.

5. Couverture (30) selon l'une des revendications 3 à 4, **caractérisée en ce que** les couches et les bandes de l'au moins un élément tendeur (2) sont réalisées en des matériaux différents et/ou les couches de l'au moins un élément tendeur (2) forment des sections qui sont réalisées en un même matériau.

6. Couverture (30) selon l'une des revendications 1 à 5, **caractérisée en ce que** l'au moins un élément tendeur (2) est réalisé avec un renforcement au moins dans la zone de tension élevée de préférence au moyen de matière plastique renforcée par des fibres de carbone.

7. Couverture (30) selon l'une des revendications 1 à 6, **caractérisée en ce que** l'au moins un élément tendeur (2) présente au moins une courbure (26) dans la zone de tension élevée et des courbures (28, 29) dans les zones de bord, dans laquelle ces courbures (26, 28, 29) qui diffèrent suivant les sections, présentent un rayon qui diminue vers le milieu.

8. Couverture (30) selon la revendication 7, **caractérisée en ce que** l'au moins un élément tendeur (2) est formé dans la zone de tension élevée d'au moins deux couches ou bandes partiellement espacées.

9. Couverture (30) selon l'une des revendications 1 à 8, **caractérisée en ce que** la surface supérieure de l'élément tendeur (2) est égalisée au moins en partie par un élément de remplissage (27).

10. Couverture (30) selon l'une des revendications 1 à 9, **caractérisée en ce que** l'élément tendeur (2) est réalisé en fibres de carbone, fibres de verre, bois, métal, matière plastique ou une combinaison de ceux-ci.

11. Couverture (30) selon l'une des revendications 1 à 10, **caractérisée en ce que** l'élément de couverture (1) présente au moins un évidement destiné à recevoir au moins un élément tendeur (2).

12. Couverture (30) selon la revendication 11, **caractérisé en ce que** l'évidement est réalisée en tant que barrette d'insertion, poche (24, 25), noeud coulant, oeillet ou ouverture.

13. Couverture (30) selon l'une des revendications 11 ou 12, **caractérisée en ce que** l'évidement est prévu sur la face supérieure ou inférieure de l'élément de couverture (1).
